# EUROPEAN PATENT SPECIFICATION

(11) **EP 3 421 395 B1**
(45) Date of publication and mention of the grant of the patent: **03.11.2021**
(21) Application number: 18174375.8
(22) Date of filing: 25.05.2018
(51) Int. Cl.: B65G 49/06

(54) **GRIP ASSEMBLY FOR PANELS, DEVICE FOR GRIPPING AND MOVING PANELS AND MAGAZINE FOR PANEL-SHAPED PRODUCTS PROVIDED WITH SUCH GRIP ASSEMBLY**
GRIFFANORDNUNG FÜR PLATTEN, VORRICHTUNG ZUM GREIFEN UND BEWEGEN VON PLATTEN UND MAGAZIN FÜR PLATTENFÖRMIGES PRODUKTE MIT SOLCHEN GRIFFANORDNUNG VORGESEHEN
ENSEMBLE DE PRÉHENSION POUR PANNEAUX, DISPOSITIF PERMETTANT DE SAISIR ET DE DÉPLACER DES PANNEAUX ET CHARGEUR POUR PRODUITS EN FORME DE PANNEAUX COMPORTANT UN TEL ENSEMBLE DE PRÉHENSION

(30) Priority: 27.06.2017 IT 201700071436
(43) Date of publication of application: 02.01.2019
(73) Proprietor: Macotec S.R.L., 23010 Rogolo, (SO) (IT)
(72) Inventor: COLLI, Maurizio, 23019 TRAONA SO (IT)
(74) Representative: Modiano, Micaela Nadia

(56) References cited:
- WO-A1-2012/037582
- JP-A- 2006 273 521
- US-A- 4 228 993
- US-A1- 2014 033 852

## Description

The present invention relates to a grip assembly for panels, a device for gripping and moving panels that is provided with such grip assembly, and a magazine for panel-shaped products that comprises such device for gripping and moving.

In particular, but not necessarily, the panels to which reference is made are glass panels.

In the technical sector, it is known to retrieve and move panels of large dimensions by way of devices for gripping and moving which comprise a gantry crane structure that has a grip assembly, typically provided with suckers or the like.

Within a work area, in fact, the panels are usually stacked on stand-like supports that support them inclined (usually at an angle of approximately 5° with respect to the vertical); when it is necessary to retrieve a panel from the magazine and transfer it, for example, to a roller conveyor (e.g. with a tilting bed), a device for gripping and moving is used, which, according to the solutions, can be provided in various ways.

Among the most traditional solutions are those in which the gantry crane structure is provided with a movable crossmember (variously supported at a certain height) on which a carriage is mounted which can move along the crossmember, and a grip assembly for gripping panels is mounted on such carriage.

In general the suckers can be mounted in various ways on the grip assembly; however, if they extend on parallel vertical arms, this could entail problems with moving the device in the magazine: in fact, in order to reach a certain panel arranged in the magazine, it becomes necessary to follow movement trajectories that do not interfere with the panels or the stands that are in that magazine; this entails an unacceptable loss of time.

To overcome this limitation, solutions have been developed in which the suckers of the grip assembly are aligned along a single row, which can be moved (rotated) until it clears the top of the panels in the magazine, so as to be able, in the pickup path, to move the assembly above the panels, and thus be able to adopt the most rapid path.

An example of such solution is shown in FR2525196, in which the grip assembly is provided with suckers that are mutually aligned in a single horizontal row and mounted on arms that oscillate about a rotation axis parallel to the crossmember; although functional, this solution has been found to be not very versatile when it is necessary to retrieve panels of different dimensions or which are stacked against a wall of the building.

A solution that is similar, and to a certain extent more versatile, is the one shown in EP2814767, in which the suckers are divided into groups which are mounted so that they can move independently of each other on a same rotating supporting beam, which is parallel or oblique with respect to the crossmember. Although functional, this solution too is not devoid of intrinsic drawbacks, including the fact that it has been found to be unsuitable for loading panels of low height (with respect to the beam) and for loading panels of reduced width (again with respect to the beam) which are stored against a wall of the magazine: in the first case in fact, the suckers may not reach to the panel, and in the second case the panel may (owing to encumbrances) be loaded in a non-barycentric position, with all the associated risks (stability, malfunctions etc.).

WO2012037582 A1 discloses a device comprising a gripping unit (21), which has a horizontal row of suckers (35). The two rows of suckers are arranged at the same height on the gripping unit, which are provided in opposite directions. The gripping device 23 only grips the upper edge of a glass panel 5, support arms 41 can be provided on the gripping device 21 to support the glass panels 5 in the area below the suction devices 35 so that the glass panel 5 is prevented from swinging or oscillating. These arms 41 are rotatable (arrow 43) from the active position. At the free ends of the arms 41, support projections 45 are provided, which can be placed against a large area of a glass sheet 5 to be transported, and are further equipped with a soft plastic part 47 in order to avoid scratching the glass sheets 5. The length of the arms 41 can be adjustable or the arms 41 are designed to be foldable by joints, so that their free end, which has the support projection 45, is aligned with the lower edge of the glass sheet 5 to be transported.

The aim of the present invention consists of providing a grip assembly for panels and, as a consequence, a device for gripping and moving panels that is provided with such grip assembly, which solve the above mentioned technical problem, eliminate the drawbacks and overcome the limitations of the known art by improving the loading with respect to the known art, in terms of both versatility and rapidity of movement.

Within this aim, an object of the present invention is to provide such a grip assembly (and a device fitted therewith) that can pick up, rapidly and without drawbacks, even small-format panels that are arranged proximate to a wall of the magazine, without leaving the work area and enabling an optimal loading.

Another object of the invention consists of providing such a grip assembly (and a device fitted therewith) that can, during a loading stroke, follow any path without interfering with the panels or the stands of the magazine.

Another object of the invention consists in providing a grip assembly (and a device fitted therewith) that makes it possible to pick up panels in a barycentric position, irrespective of the format of the panels and/or of their position.

Another object of the invention consists in providing a grip assembly (and a device fitted therewith) that makes it possible to pick up panels stacked in packs of adjacent panels of different thickness.

Another object of the invention consists in providing a grip assembly (and a device fitted therewith) that is capable of offering the widest guarantees of reliability and safety in use.

Another object of the invention consists in providing a grip assembly (and a device fitted therewith) that is easy to implement and economically competitive when compared to the known art.

This aim and these and other objects which will become better apparent hereinafter are achieved by a grip assembly for panels that comprises:
- a carriage designed to move along a crossmember of a gantry crane structure,
- a central beam connected to said carriage and supporting at least one device for gripping,
- the assembly further comprising a first arm and a second arm each of which is provided with at least one device for gripping, said first arm and said second arm being connected to opposite ends of the central beam and being substantially coplanar with it, the first arm and the second arm being pivoted to the central beam so that they can rotate about respective first rotation axes which are mutually parallel and perpendicular to a longitudinal axis of extension of the beam; wherein said device for gripping is of the type with suckers or the like, and is adapted to attach to the panel (L).

Further aspects of the invention are a device for gripping and moving panels that comprises such grip assembly and a magazine of panel-shaped products that comprises the device for gripping and moving panels and/or the grip assembly.

Further characteristics and advantages of the invention will become better apparent from the description of four preferred, but not exclusive, embodiments of a grip assembly according to the invention and of a device for gripping and moving panels and of a magazine of panel-shaped products, which are illustrated by way of non-limiting example with the aid of the accompanying drawings wherein:
Figures 1, 2, 3 are front elevation views of a first embodiment of a grip assembly according to the invention in three operating configurations;
Figures 4, 5, 6 are front elevation views of the magazine and of the device for gripping with the grip assembly in the previous figures, in the same three operating configurations;
Figures 7, 8, 9 are front elevation views of a second embodiment of a grip assembly according to the invention in the same three operating configurations.

With reference to the figures, the grip assembly is generally designated by the reference numeral 1, 1A, in the different variations.

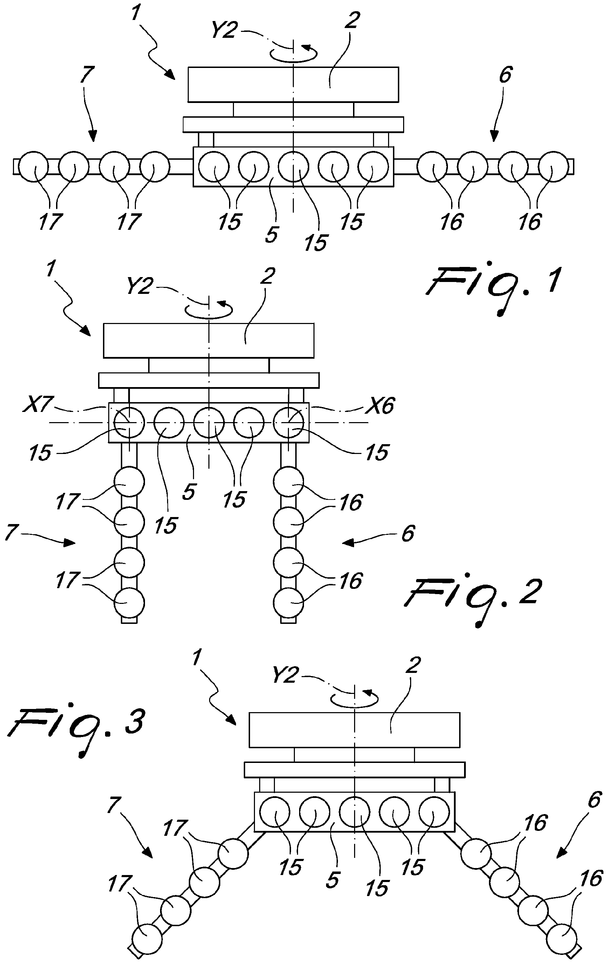

In the embodiment in Figures 1-6, the grip assembly 1 for panels (L) comprises a carriage 2 designed to move along a crossmember 3 of a gantry crane structure 4, these last items being part of the device 100 of which more will be said below.

The assembly 1 comprises a central beam 5 connected to the carriage 2 and supporting at least one device for gripping 15, preferably, as in the example shown, a plurality of devices for gripping 15.

These last items are for example of the type with suckers or the like, and are adapted to attach to the panel L; devices of this type are known in the technical field and therefore they will not be discussed further here.

According to the invention the assembly 1 comprises a first arm 6 and a second arm 7 each of which is provided with at least one device for gripping 16, 17, preferably, as in the example shown, a plurality of devices for gripping 16, 17.

The first arm 6 and the second arm 7 are connected to opposite, free ends of the central beam 5 and are substantially coplanar with it.

The first arm 6 and the second arm 7 are pivoted to the central beam 5 so as to be able to rotate about respective first rotation axes X6, X7 (protruding from the plane of the sheet in Figures 1-6), which are mutually parallel and perpendicular to a longitudinal axis of extension of the beam 5.

In this manner the arms 6 and 7 can be oriented until they assume various configurations that are angled with respect to the central beam 5, so as to arrange the respective devices for gripping 16, 17 according to various angles and various levels, thus simplifying the gripping of panels L that have different dimensions or shapes or spatial arrangements.

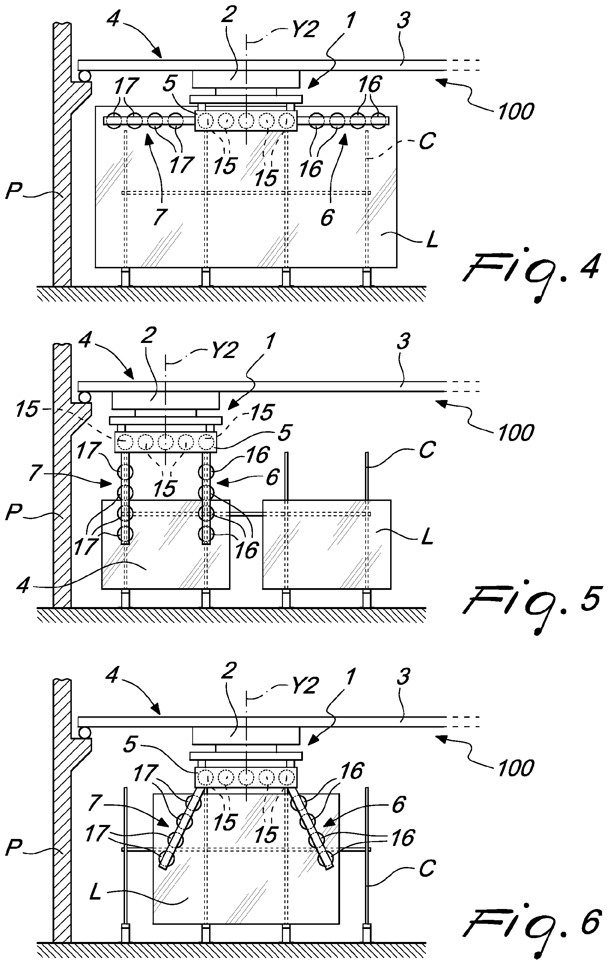

Preferably, the first arm 6 and the second arm 7 can rotate about the respective first rotation axes X6, X7 between a first stable limit position in which they are substantially aligned with the central beam 5 (as shown in Figures 1 and 4) and a second stable limit position in which they are substantially perpendicular to the central beam 5 (as shown in Figures 2 and 5).

The arms 6 and 7 are, to this end, servo-motorized, by way of at least one motor and a transmission (or alternatively two motors) or with actuators (hydraulic, pneumatic); these details are not shown because they are within the grasp of the person skilled in the art.

Given the weight of the panels L, especially when they are made of high-thickness glass, there is optionally a locking device for stably retaining the arms 6 and 7 in position at least in the two limit positions; such locking device (not shown) preferably acts between the beam 5 and the arms 6, 7 when they are in the limit positions.

Preferably, as in the example shown, the first arm 6 and the second arm 7 can also be stably arranged in a third stable position (as shown in Figures 3 and 6) in which they are inclined with respect to the central beam 5; in this manner the versatility of use can be maximized of the assembly, which, as is immediately evident from a comparison in Figures 4-6, is capable of gripping panels L of greatly differing dimensions, as well as ensuring a suspension of the panels that is substantially barycentric, even if the panel is arranged on stands C located close to the wall P.

Although generally there can also be a single device for gripping 15 on the beam 5, in the preferred embodiment shown the central beam 5 comprises a plurality of devices for gripping 15 which are mutually aligned horizontally, with reference to an operating condition of the assembly 1.

Similarly, the first arm 6 and the second arm 7 each comprise preferably a plurality of mutually aligned devices for gripping 16, 17, which are adapted to be arranged aligned with the devices for gripping 15 of the central beam 5 when the first arm 6 and the second arm 7 are aligned with the central beam 5, as can clearly be seen in Figures 1 and 4.

In the embodiments 1, 1A of the grip assembly, the central beam 5 (and consequently the first arm 6 and the second arm 7 which are coupled to it) can rotate with respect to the carriage 2, about a respective first vertical rotation axis Y2 which is substantially perpendicular to the longitudinal axis of extension of the beam 5 and is preferably coplanar with the latter, and can also move vertically along the axis (Y2) with respect to the carriage so as to be able to bring the central beam 5, the first arm 6 and the second arm 7 to a height that does not interfere with the panels L during the movement above the magazine.

Both the rotation and the vertical displacement are servo-actuated by motors and/or actuators which are not shown and are not discussed here; similarly, the possibilities of rotation/movement between the parts described here are obtained by way of joints that are conventional and which will not be discussed here because they are within the grasp of the person skilled in the art once the information relating to the invention and described herein is obtained.

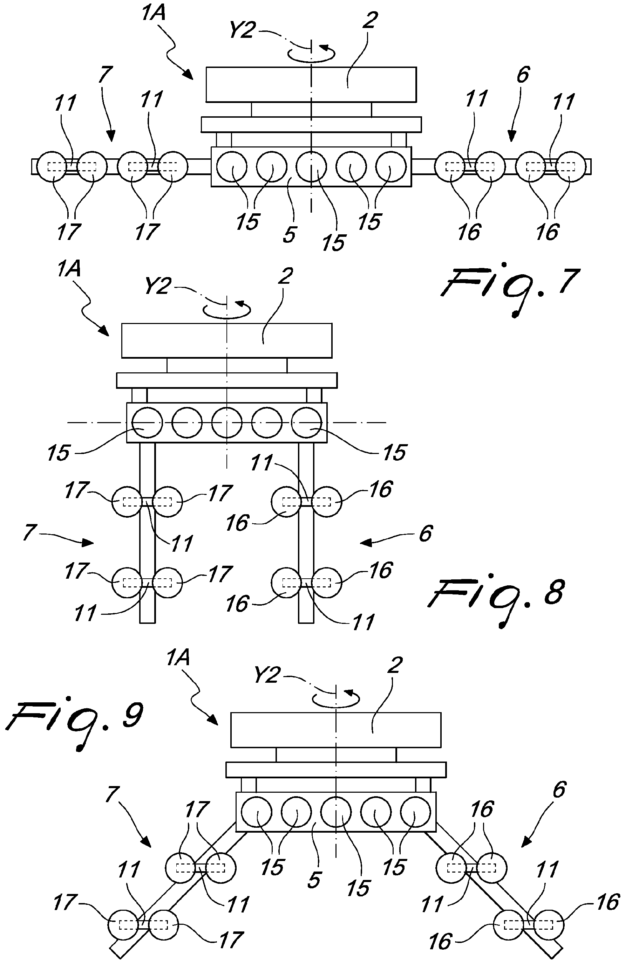

In the embodiment 1A, shown in Figures 7, 8 and 9, the grip assembly is substantially identical to the assembly 1 and the same reference numerals designate the same parts, which, for reasons of brevity, are not described again here.

The difference between the assembly 1 and the assembly 1A lies in the coupling between the devices for gripping 16, 17, respectively of the first arm 6 and of the second arm 7, and the arms 6, 7 proper.

While in fact in the assembly 1 the devices for gripping 16, 17 were integral with the respective arm 6 or 7, the grip assembly 1A comprises a support 11 for at least one pair of devices for gripping 16 or 17 of the first arm 6 and/or of the second arm 7; the support 11 is coupled so that it can oscillate to the respective arm 6, 7 about a respective rotation axis that is substantially parallel to the rotation axis X6, X7 of the first arm 6 or second arm 7, so that the pair of devices for gripping 16 or 17 which is mounted at the ends of the rod-like support 11 can be arranged so as to present the two devices of the same pair aligned on a common horizontal axis irrespective of the inclination assumed by the arm 6, 7, thus improving the gripping conditions of the panel L.

In the assembly 1 or the assembly 1A it is possible for the suckers to be oval or in any case elongated.

The preferred and illustrated embodiments 1, 1A have the plurality of devices for gripping 15, 16, 17 of the beam 5, of the first arm 6 and of the second arm 7 all arranged directed toward the same side of the beam 5, of the first arm 6 and of the second arm 7.

An embodiment can also be provided in which the devices for gripping 15, 16, 17 are directed on opposite sides of the beam 5, of the first arm 6 and of the second arm 7, so that it has devices for gripping 15, 16, 17 both in the front and in the rear; this makes it possible to avoid to provide the rotation about the axis Y2 of the beam 5, of the first arm 6 and of the second arm 7 with respect to the carriage 2, thus simplifying the implementation.

Turning now to describe the device 100 for gripping and moving panels overall, it should be noted first of all that it is shown in Figures 4-6 associated with the grip assembly 1, by way of non limiting example; it must be noted however that the device 100 can equivalently be associated with a grip assembly 1 or 1A, according to what is just described.

The device 100 comprises a gantry crane structure 4 that comprises a crossmember 3 that can move (motorized) on rails, which can be equivalently either placed on special masonry shelves on the walls P (see Figures 4-6) or supported by leg posts (not shown).

The carriage 2 can move (motorized) on the crossmember 3 of the gantry crane structure and therefore in a direction perpendicular to the direction of movement of the crossmember 3 proper along the rails.

As previously mentioned, the magazine of panel-shaped products according to the invention comprises a plurality of stand-like supports C which are designed to receive and support panels L inclined (for example a 5°) with respect to the vertical. The panels L are arranged adjacent on the stands C in the form of packs of panels L from which they are picked up (or where they are deposited) by way of the device 100, which is part of the magazine of the invention.

To this end, so as to optimize the loading path, the carriage 2 designed to move along the crossmember 3 of the gantry crane structure 4 is arranged at a level higher than a maximum height of the panels L (meaning the height of the uppermost edge of the panel) supported by the stand-like supports C; at least the beam 5 and/or the first arm 6 and/or the second arm 7 are adapted to be moved between a level lower than a maximum height of the panels L and a level higher than the maximum height of the panels L, so as to be configured respectively in an active condition and an inactive condition, in which they pass over the panels L without interfering with them.

Operation of the invention is clear and evident from the foregoing description.

In practice it has been found that the assembly, and therefore the device and therefore the magazine according to the invention, achieves the intended aim and objects in that it makes it possible to provide a solution that improves the loading with respect to the known art, in terms of both versatility and rapidity of movement.

Furthermore, the assembly, and therefore the device and therefore the magazine according to the invention, make it possible to pick up panels rapidly and without drawbacks, even small-format panels that are arranged proximate to a wall of the magazine, without leaving the work area and enabling an optimal loading.

Furthermore, the assembly, and therefore the device and therefore the magazine according to the invention, make it possible to use any path, without interfering with the panels or the stands of the magazine.

Furthermore, the assembly, and therefore the device and therefore the magazine according to the invention, make it possible to pick up panels in a barycentric position, irrespective of the format of the panels and/or of their position.

Furthermore, the assembly, and therefore the device and therefore the magazine according to the invention, make it possible to pick up panels stacked in packs of adjacent panels of different thickness.

The assembly, and therefore the device and therefore the magazine, thus conceived are susceptible of numerous modifications and variations all of which are within the scope of the appended claims.

Moreover, all the details may be substituted by other, technically equivalent elements.

In practice the materials employed, provided they are compatible with the specific use, and the contingent dimensions and shapes, may be any according to requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A grip assembly (1, 1A) for panels (L), which comprises:
- a carriage (2) designed to move along a crossmember (3) of a gantry crane structure (4),
- a central beam (5) connected to said carriage (2) and supporting at least one device for gripping (15),
- the assembly (1, 1A) further comprising a first arm (6) and a second arm (7) each of which is provided with at least one device for gripping (16, 17), said first arm (6) and said second arm (7) being connected to opposite ends of the central beam (5) and being substantially coplanar with it, the first arm (6) and the second arm (7) being pivoted to the central beam (5) so that they can rotate about respective first rotation axes (X6, X7) which are mutually parallel and perpendicular to a longitudinal axis of extension of the beam (5); **characterized in that**: said device for gripping (16, 17) is of the type with suckers or the like, and is adapted to attach to the panel (L).

2. The grip assembly (1, 1A) according to claim 1, **characterized in that** the first arm (6) and the second arm (7) can rotate about the respective first rotation axes (X6, X7) between a first stable limit position, in which they are substantially aligned with the central beam (5), and a second stable limit position, in which they are substantially perpendicular to the central beam (5).

3. The grip assembly (1, 1A) according to claim 2, **characterized in that** the first arm (6) and the second arm (7) can be positioned stably in a third stable position in which they are inclined with respect to the central beam (5).

4. The grip assembly (1, 1A) according to one or more of the preceding claims, **characterized in that** the central beam (5) comprises a plurality of devices for gripping (15) which are mutually aligned horizontally, with reference to an operating condition of the assembly (1).

5. The grip assembly (1, 1A) according to one or more of the preceding claims, **characterized in that** the first arm (6) and the second arm (7) each comprise a plurality of mutually aligned devices for gripping (16, 17), which are adapted to be aligned with the devices for gripping (15) of the central beam (5) when the first arm (6) and the second arm (7) are aligned with the central beam (5).

6. The grip assembly (1, 1A) according to one or more of the preceding claims, **characterized in that** the central beam (5) is coupled rotatably to the carriage (2) about a respective first vertical rotation axis (Y2) which is substantially perpendicular to the longitudinal axis of extension of the beam (5) and is preferably coplanar with the latter.

7. The grip assembly (1, 1A) according to one or more of the preceding claims, **characterized in that** the plurality of devices for gripping (15, 16, 17) of the beam (5), of the first arm (6) and of the second arm (7) are arranged alternately: either all (1, 1A) directed toward a same side of the beam (5), of the first arm (6) and of the second arm (7), or all directed on opposite sides of the beam (5), of the first arm (6) and of the second arm (7).

8. A device (100) for gripping and moving panels, which comprises a gantry crane structure (4) comprising a crossmember (3) that can move on tracks, **characterized in that** it comprises a grip assembly (1, 1A) according to one or more of the preceding claims which is coupled to the crossmember (3).

9. A magazine for panel-shaped products, which comprises a plurality of stand-like supports (C) that are designed to receive and support panels (L), **characterized in that** it furthermore comprises a device (100) for gripping and moving panels according to claim 8, wherein the carriage (2) designed to move along the crossmember (3) of the gantry crane structure (4) is arranged at a height that is higher than a maximum height of the panels (L) that are supported by the stand-like supports (C), and wherein at least the beam (5) and/or the first arm (6) and/or the second arm (7) are adapted to be moved between a height that is higher than a maximum height of the panels (L) and a height that is lower than the maximum height of the panels (L).

## Patentansprüche

1. Griffanordnung (1, 1A) für Platten (L), umfassend:
- einen Schlitten (2), der dazu bestimmt ist, sich entlang eines Querträgers (3) einer Portalkranstruktur (4) zu bewegen,
- einen Mittelträger (5), der mit dem Schlitten (2) verbunden ist und mindestens eine Vorrichtung zum Greifen (15) trägt,
wobei die Anordnung (1, 1A) ferner einen ersten Arm (6) und einen zweiten Arm (7) umfasst, von denen jeder mit mindestens einer Vorrichtung zum Greifen (16, 17) ausgestattet ist, wobei der erste Arm (6) und der zweite Arm (7) mit gegenüberliegenden Enden des Mittelträgers (5) verbunden und mit diesem im wesentlichen koplanar sind, wobei der erste Arm (6) und der zweite Arm (7) an dem Mittelträger (5) so angelenkt sind, dass sie sich um jeweilige erste Drehachsen (X6, X7) drehen können, die zueinander parallel und senkrecht zu einer Längserstreckungsachse des Trägers (5) sind, **dadurch gekennzeichnet, dass**:
die Vorrichtung zum Greifen (16, 17) von der Art mit Saugnäpfen oder dergleichen ist und geeignet ist, um an der Platte angebracht zu werden.

2. Griffanordnung (1, 1A) nach Anspruch 1, **dadurch gekennzeichnet, dass** sich der erste Arm (6) und der zweite Arm (7) um die jeweiligen ersten Drehachsen (X6, X7) zwischen einer ersten stabilen Endposition, in der sie im Wesentlichen mit dem Mittelträger (5) fluchten, und einer zweiten stabilen Endposition, in der sie im Wesentlichen senkrecht zum Mittelträger (5) stehen, drehen können.

3. Griffanordnung (1, 1A) nach Anspruch 2, **dadurch gekennzeichnet, dass** der erste Arm (6) und der zweite Arm (7) stabil in einer dritten stabilen Position positionierbar sind, in der sie in Bezug auf den Mittelträger (5) geneigt sind.

4. Griffanordnung (1, 1A) nach einem oder mehreren der vorhergehenden Ansprüche, **dadurch gekennzeichnet, dass** der Mittelträger (5) mehrere Vorrichtungen zum Greifen (15) umfasst, die bezüglich eines Betriebszustandes der Anordnung (1) horizontal zueinander ausgerichtet sind.

5. Griffanordnung (1, 1A) nach einem oder mehreren der vorhergehenden Ansprüche, **dadurch gekennzeichnet, dass** der erste Arm (6) und der zweite Arm (7) jeweils mehrere zueinander ausgerichtete Vorrichtungen zum Greifen (16, 17) aufweisen, die geeignet sind, um mit den Vorrichtungen zum Greifen (15) des Mittelträgers (5) ausgerichtet zu werden, wenn der erste Arm (6) und der zweite Arm (7) mit dem Mittelträger (5) ausgerichtet sind.

6. Griffanordnung (1, 1A) nach einem oder mehreren der vorhergehenden Ansprüche, **dadurch gekennzeichnet, dass** der Mittelträger (5) an den Schlitten (2) um eine jeweilige erste vertikale Drehachse (Y2) drehbar gekoppelt ist, die im Wesentlichen senkrecht zur Längserstreckungsachse des Trägers (5) und vorzugsweise mit diesem koplanar ist.

7. Griffanordnung (1, 1A) nach einem oder mehreren der vorhergehenden Ansprüche, **dadurch gekennzeichnet, dass** die mehreren Vorrichtungen zum Greifen (15, 16, 17) des Trägers (5), des ersten Arms (6) und des zweiten Arms (7) abwechselnd angeordnet sind: entweder sind alle (1, 1A) auf eine gleiche Seite des Trägers (5), des ersten Arms (6) und des zweiten Arms (7) gerichtet, oder es sind alle auf gegenüberliegende Seiten des Trägers (5), des ersten Arms (6) und des zweiten Arms gerichtet (7).

8. Vorrichtung (100) zum Greifen und Bewegen von Platten, die eine Portalkranstruktur (4) mit einem auf Schienen verfahrbaren Querträger (3) umfasst, **dadurch gekennzeichnet, dass** sie eine Griffanordnung (1, 1A) nach einem oder mehreren der vorhergehenden Ansprüche umfasst, die an den Querträger (3) gekoppelt ist.

9. Magazin für plattenförmige Produkte, das mehrere steherartige Stützen (C) umfasst, die dazu bestimmt sind, Platten (L) aufzunehmen und zu stützen, **dadurch gekennzeichnet, dass** es ferner eine Vorrichtung (100) zum Greifen und Bewegen von Platten nach Anspruch 8 umfasst, wobei der Schlitten (2), der dazu bestimmt ist, sich entlang des Querträgers (3) der Portalkranstruktur (4) zu bewegen, in einer Höhe angeordnet ist, die höher ist als eine maximale Höhe der Platten (L), die von den steherartigen Stützen (C) gestützt werden, und wobei zumindest der Träger (5) und/oder der erste Arm (6) und/oder der zweite Arm (7) angepasst sind, um zwischen einer Höhe, die höher als eine maximale Höhe der Platten (L) ist, und einer Höhe, die niedriger als die maximale Höhe der Platten (L) ist, bewegt zu werden.

## Revendications

1. Ensemble préhension (1, 1A) pour des panneaux (L), qui comprend :
- un chariot (2) conçu pour se déplacer le long d'une traverse (3) d'une structure de portique (4),
- une poutre centrale (5) reliée audit chariot (2) et soutenant au moins un dispositif de préhension (15),
- l'ensemble (1, 1A) comprenant en outre un premier bras (6) et un second bras (7), chacun étant pourvu d'au moins un dispositif de préhension (16, 17), ledit premier bras (6) et ledit second bras (7) étant reliés à des extrémités opposées de la poutre centrale (5) et étant sensiblement coplanaires avec celle-ci, le premier bras (6) et le second bras (7) pivotant par rapport à la poutre centrale (5) de sorte qu'ils peuvent tourner autour de premiers axes de rotation (X6, X7) respectifs qui sont mutuellement parallèles et perpendiculaires à un axe d'extension longitudinal de la poutre (5) ; **caractérisé en ce que** : ledit dispositif de préhension (16, 17) est de type avec des ventouses ou similaires, et est conçu pour se fixer au panneau (L).

2. Ensemble préhension (1, 1A) selon la revendication 1, **caractérisé en ce que** le premier bras (6) et le second bras (7) peuvent pivoter autour des premiers axes de rotation (X6, X7) respectifs entre une première position limite stable, dans laquelle ils sont sensiblement alignés avec la poutre centrale (5), et une deuxième position limite stable, dans laquelle ils sont sensiblement perpendiculaires à la poutre centrale (5).

3. Ensemble préhension (1, 1A) selon la revendication 2, **caractérisé en ce que** le premier bras (6) et le second bras (7) peuvent être positionnés de manière stable dans une troisième position stable dans laquelle ils sont inclinés par rapport à la poutre centrale (5).

4. Ensemble préhension (1, 1A) selon une ou plusieurs des revendications précédentes, **caractérisé en ce que** la poutre centrale (5) comprend une pluralité de dispositifs de préhension (15) qui sont mutuellement alignés horizontalement, en référence à un état de fonctionnement de l'ensemble (1).

5. Ensemble préhension (1, 1A) selon une ou plusieurs des revendications précédentes, **caractérisé en ce que** le premier bras (6) et le second bras (7) comprennent chacun une pluralité de dispositifs de préhension (16, 17) mutuellement alignés, qui sont conçus pour être alignés avec les dispositifs de préhension (15) de la poutre centrale (5) lorsque le premier bras (6) et le second bras (7) sont alignés avec la poutre centrale (5).

6. Ensemble préhension (1, 1A) selon une ou plusieurs des revendications précédentes, **caractérisé en ce que** la poutre centrale (5) est couplée de manière rotative au chariot (2) autour d'un premier axe de rotation vertical respectif (Y2) qui est sensiblement perpendiculaire à l'axe d'extension longitudinal de la poutre (5) et qui est de préférence coplanaire avec cette dernière.

7. Ensemble préhension (1, 1A) selon une ou plusieurs des revendications précédentes, **caractérisé en ce que** la pluralité de dispositifs de préhension (15, 16, 17) de la poutre (5), du premier bras (6) et du second bras (7), sont agencés alternativement : soit tous (1, 1A) dirigés vers un même côté de la poutre (5), du premier bras (6) et du second bras (7), soit tous dirigés sur des côtés opposés de la poutre (5), du premier bras (6) et du second bras (7).

8. Dispositif (100) de préhension et de déplacement de panneaux, qui comprend une structure de portique (4) comprenant une traverse (3) qui peut se déplacer sur des rails, **caractérisé en ce qu'**il comprend un ensemble préhension (1, 1A), selon une ou plusieurs des revendications précédentes, qui est couplé à la traverse (3).

9. Magasin de produits en forme de panneau, qui comprend une pluralité de supports de type montant (C) qui sont conçus pour recevoir et soutenir des panneaux (L), **caractérisé en ce qu'**il comprend en outre un dispositif (100) de préhension et de déplacement de panneaux selon la revendication 8, dans lequel le chariot (2) conçu pour se déplacer le long de la traverse (3) de la structure de portique (4) est agencé à une hauteur qui est supérieure à une hauteur maximale des panneaux (L) qui sont soutenus par les supports de type montant (C), et dans lequel au moins la poutre (5) et/ou le premier bras (6) et/ou le second bras (7) sont conçus pour être déplacés entre une hauteur qui est supérieure à une hauteur maximale des panneaux (L) et une hauteur qui est inférieure à la hauteur maximale des panneaux (L).
